# EUROPÄISCHE PATENTSCHRIFT

(11) **EP 0 923 469 B1**
(45) Veröffentlichungstag und Bekanntmachung des Hinweises auf die Patenterteilung: **19.03.2003**
(21) Anmeldenummer: 98936219.9
(22) Anmeldetag: 18.06.1998
(51) Int. Cl.: B60S 1/38, B60S 1/40

(54) **WISCHBLATT FÜR SCHEIBEN VON KRAFTFAHRZEUGEN**
WIPER BLADE FOR MOTOR VEHICLE GLASS PANES
RACLETTE D'ESSUIE-GLACE POUR VITRES DE VEHICULES

(30) Priorität: 11.07.1997 DE 29712293 U
(43) Veröffentlichungstag der Anmeldung: 23.06.1999
(73) Patentinhaber: ROBERT BOSCH GMBH, 70442 Stuttgart (DE)
(72) Erfinder: KOTLARSKI, Thomas, D-77830 Bühlertal (DE)
(86) Internationale Anmeldenummer: DE9801676
(87) Internationale Veröffentlichungsnummer: WO99002381

(56) Entgegenhaltungen:
- US-A- 1 573 618
- US-A- 2 056 777
- US-A- 3 838 475
- US-A- 3 872 537

## Beschreibung

### Stand der Technik

Bei Wischblättern der im Oberbegriff des Anspruchs bezeichneten Art soll das Tragelement für das gesamte vom Wischblatt bestrichene Wischfeld eine möglichst gleichmäßige Verteilung des vom Wischerarm ausgehenden Wischblatt-Anpreßdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein, als die im Wischfeld der zu wischenden Scheibe gemessene stärkste Krümmung. Das Tragelement ersetzt somit die aufwendige Tragbügelkonstruktion mit zwei in der Wischleiste angeordnete Federschienen, wie sie bei herkömmlichen Wischblättern praktiziert wird.

Die Erfindung geht aus von einem Wischblatt nach der Gattung des Anspruchs 1. Bei einem bekannten Wischblatt dieser Art (DE-OS 23 44 876) ist das aus Kunststoff gefertigte und deshalb vergleichsweise dicke Tragelement mit seitlichen Gelenkzapfen versehen, deren gemeinsame Schwenkachse näher an der Scheibe liegt als die von der Scheibe abgewandte Bandfläche des Tragelements. Diese Schwenkachse soll eine Relativbewegung zwischen dem Wischerarm und dem Wischblatt ermöglichen, die erforderlich ist um die Wischleiste in allen Betriebslagen an den Verlauf der Scheibe anzupassen, welche überwiegend sphärisch gekrümmt ist, aber nicht einem Abschnitt einer Kugeloberfläche entspricht. Die aus Gründen der zur angestrebten, gleichmäßigen Anpreßdruckverteilung erforderliche Dicke des Tragelements ergibt eine große Bauhöhe, welche wegen der vor der Fahrzeugscheibe vorhandenen Luftströmungsverhältnisse unerwünscht ist, weil dadurch insbesondere bei hohen Fahrgeschwindigkeiten die Wischqualität beeinträchtigt wird.

Wischblätter, wie sie beispielsweise aus der US-PS 2,056,777 bekannt sind, weisen einen meist flachen Gummistreifen auf, der von einem U-förmigen Bügel gehalten wird. An den U-förmigen Bügel sind seinerseits Haltemittel zum Anschluss eines Wischerarms angebracht. Aufgrund der Form des Bügels ist das Wischblatt entlang seiner Länge jedoch starr und kann damit den unterschiedlichen Krümmungsradien, wie sie heutzutage vorliegen, nicht folgen, sodass diese Art des Wischblattaufbaus bereits vom Prinzip her für heutige Scheiben ausgeschlossen ist.

### Vorteile der Erfindung

Bei dem erfindungsgemäßen Wischblatt kann bei Verwendung eines aus einem Metall gefertigten Tragelements dessen Dicke erheblich reduziert werden. Durch die erfindungsgemäße Anordnung der Schwenkachse bezüglich der von der Scheibe abgewandten Bandfläche des Tragelements wird darüber hinaus die Führung des Wischblatts auf der Scheibe verbessert, weil die von der Reibung zwischen Wischleiste und Scheibe ausgehende, auf das Wischblatt einwirkenden Kippkräfte durch die Verkleinerung des in dieser Hinsicht wirksamen Hebelarms reduziert werden. Das Tragelement kann dabei auch mehrteilig ausgeführt sein und beispielsweise zwei oder mehrere parallele Blechstreifen aufweisen.

Eine praxisfreundliche Realisierung der Schwenkachse ergibt sich, wenn die Schwenkachse durch die gemeinsame Längsachse von zwei am Tragelement einander gegenüberliegend angeordneten, über dessen Längskanten vorstehende Zapfen gebildet ist.

Eine kostengünstige Anordnung der Zapfen am metallischen Tragelement wird erreicht, wenn diese an einem zum Tragelement gehörenden, separaten Bauteil angeordnet sind, das fest mit dem Tragelement verbunden ist.

Die Forderung nach einer möglichst geringen Bauhöhe des Wischblatts wird in besonders vorteilhafter Weise erfüllt, wenn in Fortbildung der Erfindung das Bauteil im Querschnitt U-förmig ausgebildet ist, wenn dessen U-Basis mit ihrer Innenseite an der von der Scheibe abgewandten Bandfläche des Tragelements anliegt, wobei die U-Schenkel jeweils eine Längskante des Tragelements übergreifen und wenn schließlich an den voneinander abgewandten Außenseiten eines jeden U-Schenkels ein Zapfen angeordnet ist. Ein derartiger Aufbau führt auch zu einer kostengünstigen und dauerhaften verbindung zwischen dem Tragelement und dem Bauteil.

Das Bauteil kann einfach und preiswert aus einem Kunststoff hergestellt werden, wobei die Zapfen einstückig an dieses angeformt sind.

Zur Schaffung der notwendigen Schwenklagerung ist jedem der beiden Zapfen eine am Wischerarm vorhandene Lageraufnahme zugeordnet.

Weitere vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

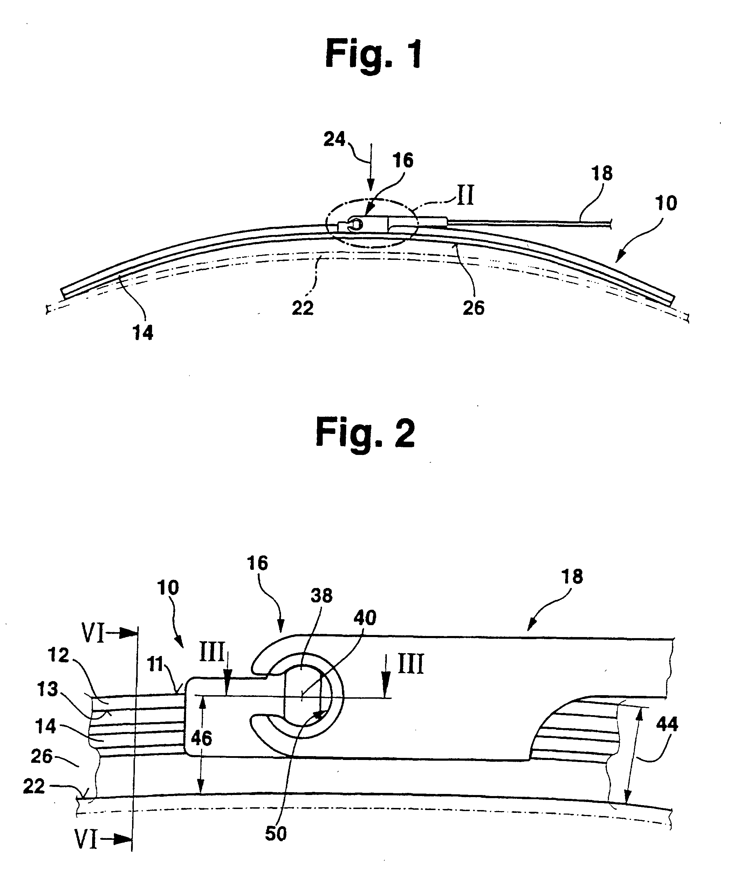

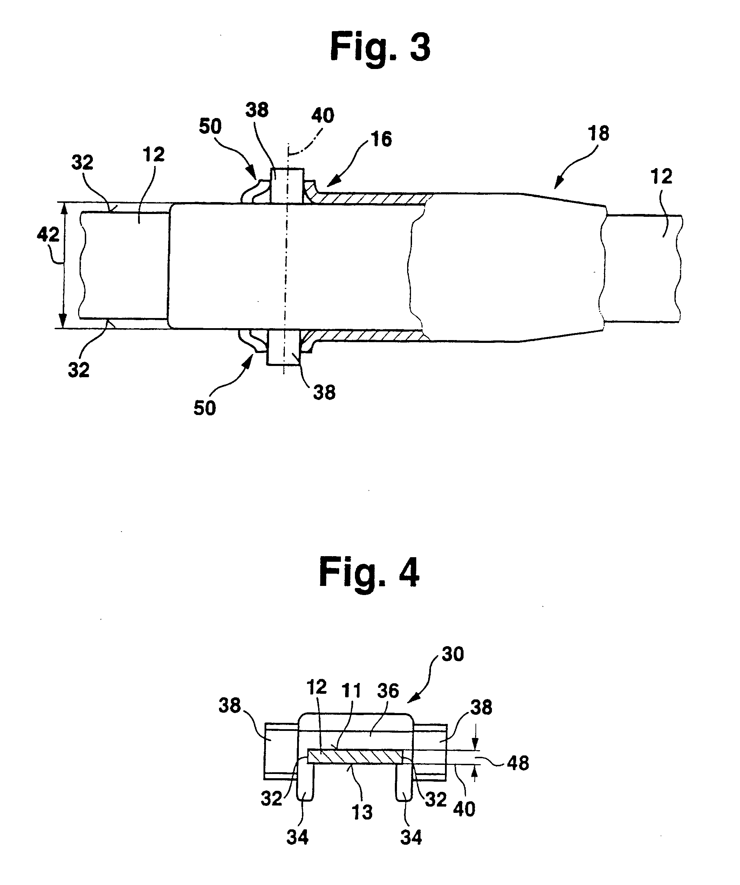

In der Zeichnung zeigen: Figur 1 eine Seitenansicht eines erfindungsgemäßen, mit einem Wischerarm verbundenen Wischblatts, Figur 2 eine vergrößerte Darstellung einer in Figur 1 mit II bezeichneten Einzelheit, Figur 3 eine Draufsicht auf die in Figur 2 dargestellte Gelenkverbbindung zwischen Wischblatt und Wischerarm, entlang der Linie III-III in Figur 2 teilweise geschnitten und Figur 4 einen Schnitt entlang der Linie IV-IV in Figur 2 durch das vom Wischerarm gelöste Tragelement von dem die Wischleiste entfernt worden ist.

### Beschreibung des Ausführungsbeispiels

Ein in Figur 1 gezeigtes Wischblatt 10 weist ein bandartig langgestrecktes, federelastische Tragelement 12 auf (Figur 2), an dessen Unterseite 13 eine langgestreckte, gummielastische Wischleiste 14 längsachsenparallel befestigt ist. An der Oberseite 11 des auch als Federschiene zu bezeichnenden Tragelements 12 ist in dessen Mittelabschnitt eine Anschlußvorrichtung 16 angeordnet, mit deren Hilfe das Wischblatt 10 gelenkig mit einem angetriebenen Wischerarm 18 lösbar verbunden werden kann. Der Wischerarm 18 ist in Richtung des Pfeiles 24 zur zu wischenden Scheibe 20 - beispielsweise die Windschutzscheibe eines Kraftfahrzeugs - belastet, deren Oberfläche in Figur 1 durch eine strichpunktierte Linie 22 angedeutet ist. Da die strichpunktierte Linie 22 die stärkste Krümmung der Scheibenoberfläche darstellen soll ist klar ersichtlich, daß die Krümmung des mit seinen beiden Enden an der Scheibe anliegenden Wischblatts 10 stärker ist als die maximale Scheibenkrümmung. Unter dem Anpreßdruck (Pfeil 24) legt sich das Wischblatt 10 mit seiner Wischlippe 26 über seine gesamte Länge der Scheibenoberfläche 22 an. Dabei baut sich im aus Metall gefertigten, federelastischen Tragelement 12 ein Spannung auf, welche für eine ordnungsgemäße Anlage der Wischleiste 14 bzw. deren Wischlippe 26 über deren gesamten Länge der Scheibe 20 sowie für eine gleichmäßige Verteilung des Anpreßdrucks (Pfeil 24) sorgt. Weil die in aller Regel sphärisch gekrümmte Scheibe nicht ein Abschnitt einer Kugeloberfläche darstellt muß sich das Wischblatt 10 gegenüber dem Wischerarm 18 während seiner Wischbewegung ständig der jeweiligen Lage der Scheibenoberfläche 22 anpassen können. Deshalb ist die Anschlußvorrichtung 16 gleichzeitig als Gelenkverbindung ausgebildet.

Im folgenden soll die Verbindung zwischen dem Tragelement 12 und dem Wischerarm 18 anhand der Figuren 1 bis 3 näher erläutert werden. Zur Anschlußvorrichtung 16 gehören wischerarmseitige und wischblattseitige Kupplungsmittel. Die wischblattseitigen Kupplungsmittel sind beim Ausführungsbeispiel an einem zum Tragelement 12 gehörenden Bauteil 30 ausgebildet, welches fest mit dem Tragelement 12 verbunden ist. Das aus einem Kunststoff hergeestellte Bauteil 30 hat einen im wesentlichen U-förmigen Querschnitt. Wie Figur 4 zeigt, sitzt das Tragelement 12 mit seinen beiden Längskanten 32 in den U-Schenkeln 34 des Bauteils 30. Die U-Basis 36 des Tragelements 12 liegt mit ihrer Innenseite an der Oberseite 11 des Bauteils 30 an. An den U-Schenkeln 34 des Bauteils 30 sind einander gegenüberliegende und sich voneinander wegerstreckende Zapfen 38 angeordnet, an denen einmal wischerarmseitige Kupplungsmittel angreifen und die zum anderen Lagerzapfen für eine gelenkige Verbindung zwischen dem Wischerarm 18 und dem Wischblatt 10 sorgen. Dazu weisen die beiden Zapfen 38 eine gemeinsame Längs- oder Schwenkachse 40 auf. Wie Figur 1 zeigt, ist das Bauteil 30 im Mittelabschnitt des aus einem Metall hergestellten Tragelements 12 befestigt. Die Schwenkachse 40 erstreckt sich quer zur Längsachse des langgestreckten Wischblatts 10, welches während des Wischbetriebs quer zu seiner Längserstreckung in Richtung des Doppelpfeils 42 (Figur 3) über die zu wischende Scheibe 20 verschoben wird.

Figur 2 zeigt, daß das auf der Scheibe 20 angelegte Wischblatt 10 eine Bauhöhe 44 hat, die dem Abstand 44 zwischen der Scheibenoberfläche 22 und der von der Scheibe 20 abgewandten Oberseite 11 des Tragelements 12 entspricht. Weiter ist in Figur 2 ein Maß 46 angegeben, welches sich aus dem Abstand zwischen der Oberfläche 22 der zu wischenden Scheibe 20 und der Längs- oder Schwenkachse 40 ergibt.

Wenn das Wischblatt wie in Figur 2 gezeichnet sich in seiner Betriebsstellung befindet und durch den angetriebenen Wischerarm 18 in Richtung des Doppelpfeiles 42 über die Oberfläche 22 der zu wischenden Scheibe 20 geführt wird, bewegt sich die Schwenkachse 40 in einer Ebene, welche zumindest annähernd parallel zur Oberfläche 22 der Scheibe 20 liegt. Der Abstand dieser Ebene von der Oberfläche 22 der Scheibe 20 entspricht dem Maß 46. Aus Figur 4 ist klar ersichtlich, daß die Längs- oder Schwenkachse 40 der beiden Zapfen 38 um ein Maß 48 näher an der Scheibenoberfläche 22 liegt als die Oberseite 11 des Tragelements 12. Das Maß 48 entspricht der Differenz zwischen den Maßen 44 und 46.

Daraus ergibt sich, daß sich die Schwenkachse 40 in einer Ebene bewegt, die sich in dem Abstand 46 von der Scheibe im wesentlichen parallel zu dieser erstreckt. Um eine möglichst niedrige Bauform des Wischblatts zu erhalten, ist diese Maß 46 so gewählt, daß dieses höchstens so groß ist wie der Abstand zwischen der Scheibenoberfläche 22 und dem von der Scheibe 20 abgewandten oberen Bandfläche 11 des Tragelements 12. Dies wird auf eine besonders einfache Weise dadurch erreicht, daß das Bauteil 30 einen im wesentlichen U-förmigen Querschnitt hat und daß an den das Tragelement 12 an seinen beiden Längsseiten übergreifenden U-Schenkeln 34 die beiden Zapfen 38 angeordnet sind. Wenn dieses Bauteil 30 aus einem Kunststoff gefertigt ist, können die Zapfen 38 zweckmäßig einstückig an dieses angeformt sein. Wie Figur 3 zeigt, ist jedem der beiden Zapfen 38 eine am Wischerarm 18 vorhandene Lageraufnahme 50 zugeordnet. Die Ausgestaltung der Lageraufnahmen 50 ist aus Figur 2 ersichtlich. Sie gestattet ein einfaches Anschließen des Wischblatts 10 am Wischerarm 18 mit Hilfe einer sogenannten Steck-Drehverbindung, die während des Betriebs des Wischblatts ein unbeabsichtigtes Lösen des Wischblatts 10 vom Wischerarm 18 verhindert.

Die beiden Lageraufnahmen 50 bilden die wischerarmseitigen Gegenkupplungsmittel für die Kupplungsmittel des Wischblatts 10, welche durch die beiden fest mit dem Tragelement 12 verbundenen Zapfen 38 realisiert sind.

## Patentansprüche

1. Wischblatt (10) für Scheiben von Kraftfahrzeugen, das mit wischblattseitigen Kupplungsmitteln an Gegenkupplungsmitteln eines am Kraftfahrzeug geführten, angetriebenen Wischerarms (18) anschließbar ist, wobei die wischblattseitigen Kupplungsmittel im Mittelabschnitt eines bandartig langgestreckten, federelastischen Tragelements (12) des Wischblatts (10) plaziert sind, an dessen der zu wischenden Scheibe (20) zugewandten Seite eine an der Scheibe anlegbare, langgestreckte, gummielastische Wischleiste (14) im wesentlichen längsachsenparallel angeordnet ist und das quer zu seiner Längserstreckung über die Scheibe (20) verschiebbare Wischblatt gegenüber dem Wischerarm (18) um eine Achse (40) schwenkbar ist, die sich in der Verschieberichtung (42) erstreckt, **dadurch gekennzeichnet, daß** das Tragelement (12) aus einem Metall gefertigt ist und daß der Abstand (46) der Verschiebungsebene der Schwenkachse (40) von der zu wischenden Oberfläche (22) der Scheibe (20) höchstens so groß ist wie der Abstand (44) zwischen dieser Oberfläche (22) und der von der Scheibe (20) abgewandten Bandfläche (11) des Tragelements (12).

2. Wischblatt nach Anspruch 1, **dadurch gekennzeichnet, daß** die Schwenkachse (40) durch die gemeinsame Längsachse von zwei am Tragelement einander gegenüberliegend angeordneten, über dessen Längskanten vorstehende Zapfen (38) gebildet ist.

3. Wischblatt nach Anspruch 2, **dadurch gekennzeichnet, daß** die Zapfen (38) an einem zum Tragelement (12) gehörenden separaten Bauteil (30) angeordnet sind, das fest mit dem Tragelement (12) verbunden ist.

4. Wischblatt nach Anspruch 3, **dadurch gekennzeichnet, daß** das Bauteil (30) im Querschnitt U-förmig ausgebildet ist, daß dessen U-Basis (36) mit ihrer Innenseite an der von der Scheibe (20) abgewandten oberen Bandfläche (11) des Tragelements (12) anliegt, wobei die U-Schenkel (34) jeweils eine Längskante (32) des Tragelements (12) übergreifen und daß an den voneinander abgewandten Außenseiten eines jeden U-Schenkels (34) ein Zapfen (38) angeordnet ist.

5. Wischblatt nach einem der Ansprüche 3 oder 4, **dadurch gekennzeichnet, daß** das Bauteil (30) aus einem Kunststoff gefertigt ist und daß die Zapfen (38) einstückig an dieses angeformt sind.

6. Wischblatt nach einem der Ansprüche 2 bis 5, **dadurch gekennzeichnet, daß** jedem der Zapfen (38) eine am Wischerarm (18) vorhandene Lageraufnahme (50) zugeordnet ist.

## Claims

1. Wiper blade (10) for windows of motor vehicles, which can be connected by wiper-blade-side coupling means to mating coupling means of a driven wiper arm (18) guided on the motor vehicle, the wiper-blade-side coupling means being placed in the central section of a resilient supporting element (12), which is elongate in a band-like manner, of the wiper blade (10), on whose side facing the window (20) to be wiped an elongate, rubber-elastic wiper strip (14) which can be placed against the window is arranged essentially parallel to the longitudinal axis, and the wiper blade, which can be displaced transversely to its longitudinal extent over the window (20), can be pivoted relative to the wiper arm (18) about an axis (40) which extends in the displacement direction (42), **characterized in that** the supporting element (12) is manufactured from a metal, and **in that** the distance (46) of the displacement plane of the pivot axis (40) from the surface (22) of the window (20) to be wiped is at most as large as the distance (44) between this surface (22) and that band surface (11) of the supporting element (12) which faces away from the window (20).

2. Wiper blade according to Claim 1, **characterized in that** the pivot axis (40) is formed by the common longitudinal axis of two pins (38) which are arranged opposite each other on the supporting element and protrude over the longitudinal edges thereof.

3. Wiper blade according to Claim 2, **characterized in that** the pins (38) are arranged on a separate component (30) which belongs to the supporting element (12) and is connected fixedly to the supporting element (12).

4. Wiper blade according to Claim 3, **characterized in that** the component (30) is of U-shaped design in cross section, **in that** its U-base (36) bears with its inner side against that upper band surface (11) of the supporting element (12) which faces away from the window (20), the U-limbs (34) in each case engaging over a longitudinal edge (32) of the supporting element (12), and **in that** a pin (38) is arranged on the mutually remote outer sides of each U-limb (34).

5. Wiper blade according to either of Claims 3 and 4, **characterized in that** the component (30) is manufactured from a plastic, and **in that** the pins (38) are moulded onto the latter as a single piece.

6. Wiper blade according to one of Claims 2 to 5, **characterized in that** each of the pins (38) is assigned a bearing socket (50) on the wiper arm (18).

## Revendications

1. Raclette d'essuie-glace (10) pour vitres de véhicules automobiles dans laquelle
- des moyens d'accouplement sont prévus du côté de la raclette pour raccorder celle-ci à des moyens d'accouplement correspondants montés sur un bras d'essuie-glace (18) entraîné et guidé sur la glace.
- les moyens d'accouplement du côté de la raclette sont placés sur la partie médiane d'un élément porteur (12) de la raclette (10) élastique et allongé à la manière d'une bande, et qui porte, essentiellement parallèle à son axe longitudinal et allongée sur sa face en regard de la vitre (20) à essuyer, une lame d'essuyage (14) pouvant s'appliquer sur la vitre et élastique comme du caoutchouc,
- la raclette d'essuie-glace, mobile sur la vitre (20) perpendiculairement à sa dimension longitudinale, peut basculer par rapport au bras d'essuie-glace (18) autour d'un axe (40) orienté selon la direction de déplacement (42) de la raclette.
**caractérisée en ce que**
l'élément porteur (12) est réalisé en métal et la distance (46) entre le plan de glissement de l'axe de basculement (40) et la face supérieure (22) de la vitre (20) est au plus égal à la distance (44) entre cette face (22) et la face de bande (11) de l'élément porteur (12) tournant le dos à la vitre (20).

2. Raclette d'essuie-glace selon la revendication 1,
**caractérisée en ce que**
l'axe de basculement (40) est l'axe longitudinal commun de deux pivots (38) moulés face à face en saillie sur les bords longitudinaux de l'élément porteur.

3. Raclette d'essuie-glace selon la revendication 2,
**caractérisée en ce que**
les pivots (38) sont disposés sur un composant (30) appartenant à l'élément porteur (12), et relié fixement à l'élément (12).

4. Raclette d'essuie-glace selon la revendication 3,
**caractérisée en ce que**
le composant (30) présente en section la forme d'un U dont la base (36) a sa face interne appliquée sur la face supérieure de bande (11) de l'élément porteur (12) tournant le dos à la vitre (20), les ailes (34) de l'U étant en prise chacune avec un bord longitudinal (32) de l'élément porteur (12) et portant sur leurs faces externes éloignées l'une de l'autre, chacune un pivot (38).

5. Raclette d'essuie-glace selon la revendication 3 ou 4,
**caractérisée en ce que**
le composant (30) est fabriqué en matière plastique et les pivots (38) sont moulés monoblocs avec lui.

6. Raclette d'essuie-glace selon l'une quelconque des revendications 2 à 5,
**caractérisée en ce que**
à chaque pivot (38) est associé un logement de palier (50) prévu sur le bras d'essuie-glace (18).
